# EUROPÄISCHE PATENTSCHRIFT

(11) **EP 2 956 268 B1**
(45) Veröffentlichungstag und Bekanntmachung des Hinweises auf die Patenterteilung: **28.09.2016**
(21) Anmeldenummer: 14704323.6
(22) Anmeldetag: 11.02.2014
(51) Int. Cl.: B23D 59/00, B23D 45/04, B28D 1/04

(54) **VERFAHREN ZUR STEUERUNG EINES GERÄTESYSTEMS MIT EINEM WERKZEUGGERÄT UND EINER MOTORISCHEN VORSCHUBEINRICHTUNG**
METHOD OF CONTROLLING A TOOL SYSTEM WITH A TOOL AND A MOTORISED FEED DEVICE
PROCÉDÉ POUR LA COMMANDE D'UNE SYSTÈME D'OUTILS AVEC UN OUTIL ET UN DISPOSITIF D'ENTRAÎNEMENT

(30) Priorität: 14.02.2013 DE 102013202442
(43) Veröffentlichungstag der Anmeldung: 23.12.2015
(73) Patentinhaber: Hilti Aktiengesellschaft, 9494 Schaan (LI)
(72) Erfinder: BRUGGER, Peter, A-6800 Feldkirch (AT); STUDER, Georg, A-6712 Thüringen (AT)
(74) Vertreter: Hilti Aktiengesellschaft Corporate Intellectual Property
(86) Internationale Anmeldenummer: PCT/EP2014/052583
(87) Internationale Veröffentlichungsnummer: WO 2014/124912

(56) Entgegenhaltungen:
- EP-A1- 1 693 173
- EP-B1- 1 178 869
- DE-C- 921 206

## Beschreibung

### Technisches Gebiet

Die vorliegende Erfindung betrifft ein Verfahren zur Steuerung eines Gerätesystems mit einem Werkzeuggerät und einer motorischen Vorschubeinrichtung beim Bearbeiten eines Werkstückes gemäß dem Oberbegriff des Anspruchs 1.

### Stand der Technik

Aus EP 1 693 173 A1 ist ein Verfahren zur Steuerung eines Gerätesystems beim Trennen eines Werkstückes entlang einer Trennlinie bekannt. Das Gerätesystem besteht aus einer Führungsschiene, einem an der Führungsschiene verschiebbar angeordneten Sägekopf und einer motorischen Vorschubeinrichtung zum Verschieben des Sägekopfes entlang der Führungsschiene. Der Sägekopf umfasst ein Sägeblatt, das an einem Sägearm befestigt ist und um eine Drehachse angetrieben wird. Der Sägearm ist um eine Schwenkachse schwenkbar ausgebildet. Durch eine Schwenkbewegung des Sägearms um die Schwenkachse wird die Schnitttiefe des Sägeblattes im Werkstück verändert. Die Drehung des Sägeblattes um die Drehachse erfolgt über einen Antriebsmotor und die Schwenkbewegung des Sägearms erfolgt über einen Schwenkmotor. Der Antriebsmotor und der Schwenkmotor sind in einem Gerätegehäuse des Sägekopfes angeordnet. Die motorische Vorschubeinrichtung umfasst einen Führungsschlitten und einen Vorschubmotor, der im Gerätegehäuse des Sägekopfes angeordnet ist. Der Sägekopf ist auf dem Führungsschlitten angebracht und über den Vorschubmotor entlang der Führungsschiene in einer Vorschubrichtung verschiebbar ausgebildet. Im Gerätegehäuse ist neben den Motoren eine Kontrolleinrichtung zur Steuerung des Sägekopfes und der motorischen Vorschubeinrichtung vorgesehen.

Das bekannte Verfahren zur Steuerung eines Gerätesystems beim Trennen eines Werkstückes entlang einer Trennlinie weist eine Folge von drei Verfahrensschritten auf, die nacheinander ausgeführt werden. Im ersten Verfahrensschritt wird der Sägearm um einen Schwenkwinkel geneigt, der der Schnitttiefe des Teilschnittes entspricht. Im zweiten Verfahrensschritt wird der Sägekopf längs der Führungsschiene in einer Hinrichtung entlang der Vorschubrichtung bis zu einem ersten Endpunkt der Trennlinie verschoben. Im dritten Verfahrensschnitt wird der Sägekopf längs der Führungsschiene in einer Rückrichtung entlang der Vorschubrichtung bis zu einem zweiten Endpunkt der Trennlinie verschoben. Der Trennschnitt wird in mehreren Teilschnitten erstellt. Die drei Verfahrensschritte werden solange wiederholt, bis die gewünschte Schnitttiefe des Trennschnittes erreicht ist.

Bei dem bekannten Verfahren zur Steuerung eines Gerätesystems erfolgt kein gesteuertes Einstechen des Sägeblattes in das zu bearbeitende Werkstück. Im ersten Verfahrensschritt des bekannten Verfahrens wird der Sägearm unter dem Schwenkwinkel geneigt, der der Schnitttiefe des ersten Teilschnittes entspricht. Nachteilig ist, dass beim Einstechen des Sägeblattes ein Polieren der Schneidsegmente auftreten kann. Durch das Polieren der Schneidsegmente werden die Lebensdauer der Schneidsegmente und die Bearbeitungsgeschwindigkeit des Sägeblattes reduziert.

### Darstellung der Erfindung

Die Aufgabe der vorliegenden Erfindung besteht in der Entwicklung eines Verfahrens zur Steuerung eines Gerätesystems mit einem Sägeblatt, das an einem Sägearm befestigt ist, bei dem das Einstechen des Sägeblattes in ein zu bearbeitendes Werkstück im Hinblick auf die Lebensdauer und die Bearbeitungsgeschwindigkeit des Sägeblattes optimiert ist.

Diese Aufgabe wird bei dem eingangs genannten Verfahren zur Steuerung eines Gerätesystems erfindungsgemäß durch die Merkmale des unabhängigen Anspruchs gelöst. Vorteilhafte Weiterbildungen sind in den abhängigen Ansprüchen angegeben.

Erfindungsgemäß ist vorgesehen, dass während der Zustellbewegung des Sägearms in das Werkstück von einer Kontrolleinrichtung eine, mit dem Werkstück in Eingriff stehende Bogenlänge des Sägeblattes berechnet wird und die berechnete Bogenlänge mit einer voreingestellten, kritischen Bogenlänge des Sägeblattes verglichen wird. Durch die Berechnung der mit dem Werkstück in Eingriff stehenden Bogenlänge des Sägeblattes kann das erfindungsgemäße Verfahren im Hinblick auf eine hohe Bearbeitungsgeschwindigkeit des Sägeblattes und eine lange Lebensdauer der Schneidsegmente gesteuert werden. Das Einstechen des Sägeblattes erfolgt nach dem Start automatisch ohne Einwirkung des Bedieners. Dabei kann das Verfahren aus verschiedenen Positionen gestartet werden, beispielsweise aus einer Position, in der das Sägeblatt oberhalb des Werkstückes angeordnet ist, oder aus einer Position, in der das Sägeblatt bereits einen Vorschnitt im Werkstück ausgeführt hat.

Sägeblätter für Wandsägen sind zweiteilig aus einem Grundkörper und Schneidsegmenten am Umfang des Grundkörpers aufgebaut. Die Schneidsegmente bestehen aus einem Matrixwerkstoff, in den Diamantpartikel eingebettet sind. Zum Freilegen der Diamantpartikel bei der Bearbeitung ist eine minimale Flächenpressung erforderlich. Wird die minimale Flächenpressung unterschritten, werden die Diamantpartikel bei der Bearbeitung mit dem Sägeblatt nicht freigelegt und es besteht die Gefahr, dass ein Polieren der Schneidsegmente auftritt, was die Lebensdauer der Schneidsegmente und die Bearbeitungsgeschwindigkeit des Sägeblattes reduziert. Die minimale Flächenpressung der Schneidsegmente entspricht einer kritischen Bogenlänge des Sägeblattes, die nicht überschreiten werden darf. Der Wert für die kritische Bogenlänge eines Sägeblattes hängt von mehreren Parametern ab, unter anderem von der Spezifikation des Sägeblattes, dem Material des zu bearbeitenden Werkstückes sowie der Leistung und dem Drehmoment des Antriebsmotors für das Sägeblatt.

In einer Weiterentwicklung des Verfahrens wird die Zustellbewegung des Sägearms unterbrochen und es erfolgt eine Vorschubbewegung des Sägeblattes in einer Hinrichtung entlang der Vorschubrichtung, wenn die berechnete Bogenlänge der kritischen Bogenlänge des Sägeblattes entspricht. Durch die Vorschubbewegung des Sägeblattes in der Hinrichtung nimmt die, mit dem Werkstück in Eingriff stehende, Bogenlänge des Sägeblattes ab und fällt unter die kritische Bogenlänge. Die Überwachung der Bogenlänge während der Zustellbewegung des Sägearms und die Vorschubbewegung des Sägeblattes stellen sicher, dass die kritische Bogenlänge des Sägeblattes nicht überschritten wird und die Schneidsegmente eine lange Lebensdauer besitzen.

Besonders bevorzugt wird während der Vorschubbewegung des Sägeblattes von der Kontrolleinrichtung eine Verschiebung des Sägeblattes in der Hinrichtung berechnet und die berechnete Verschiebung des Sägeblattes wird mit einer voreingestellten, ersten Verschiebung verglichen. Das Sägeblatt wird durch die Vorschubbewegung im Werkstück freigeschnitten. Die Position des Sägeblattes wird beispielsweise von einem Wegsensor überwacht und an die Kontrolleinrichtung übermittelt. Die Kontrolleinrichtung berechnet aus den Positionen des Sägeblattes die Verschiebung in der Hinrichtung.

In einer Weiterentwicklung des Verfahrens wird die Vorschubbewegung des Sägeblattes unterbrochen und es erfolgt eine weitere Zustellbewegung des Sägearms in das Werkstück, wenn die berechnete Verschiebung des Sägeblattes der voreingestellten, ersten Verschiebung entspricht. Wenn das Sägeblatt durch die Verschiebung in der Hinrichtung freigeschnitten ist, unterschreitet die Bogenlänge des Sägeblattes die kritische Bogenlänge und die Zustellbewegung des Sägearms kann fortgesetzt werden.

Besonders bevorzugt wird während der weiteren Zustellbewegung des Sägearms von der Kontrolleinrichtung die, mit dem Werkstück in Eingriff stehende, Bogenlänge des Sägeblattes berechnet und die berechnete Bogenlänge des Sägeblattes mit der kritischen Bogenlänge verglichen. Die Überwachung der Bogenlänge während der Zustellbewegung des Sägearms stellt sicher, dass die kritische Bogenlänge des Sägeblattes nicht überschritten wird und die Schneidsegmente eine lange Lebensdauer besitzen.

In einer Weiterentwicklung des Verfahrens wird die weitere Zustellbewegung des Sägearms unterbrochen und es erfolgt eine Vorschubbewegung des Sägeblattes in einer, zur Hinrichtung entgegen gerichteten, Rückrichtung entlang der Vorschubrichtung, wenn die berechnete Bogenlänge der kritischen Bogenlänge des Sägeblattes entspricht. Durch die Vorschubbewegung des Sägeblattes in der Rückrichtung nimmt die mit dem Werkstück in Eingriff stehende Bogenlänge des Sägeblattes ab und fällt unter die kritische Bogenlänge.

Besonders bevorzugt wird während der Vorschubbewegung des Sägeblattes von der Kontrolleinrichtung die Verschiebung des Sägeblattes in der Rückrichtung berechnet und die berechnete Verschiebung wird mit einer voreingestellten, zweiten Verschiebung verglichen. Dabei wird die Vorschubbewegung des Sägeblattes bevorzugt unterbrochen, wenn die berechnete Verschiebung des Sägeblattes der zweiten Verschiebung entspricht. Wenn das Sägeblatt durch die Verschiebung in der Rückrichtung freigeschnitten ist, unterschreitet die Bogenlänge des Sägeblattes die kritische Bogenlänge und die Zustellbewegung des Sägearms kann fortgesetzt werden.

Die Zustellbewegung des Sägearms und die Vorschubbewegung des Sägekopfes entlang der Vorschubrichtung werden solange abwechselnd ausgeführt, bis das Einstechen des Sägeblattes beendet ist und das Sägeblatt die gewünschte Schnitttiefe im Werkstück erreicht hat.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein schienengeführtes Gerätesystem bestehend aus einer Führungsschiene, einem an der Führungsschiene verschiebbar angeordneten Sägekopf und einer motorischen Vorschubeinrichtung zum Verschieben des Sägekopfes entlang der Führungsschiene; und
- FIGN. 2A-E: den Sägekopf der FIG. 1 mit einem Sägeblatt, das an einem schwenkbaren Sägearm befestigt ist, in fünf verschiedenen Positionen während des Einstechens mit dem Sägeblatt in ein zu bearbeitendes Werkstück.

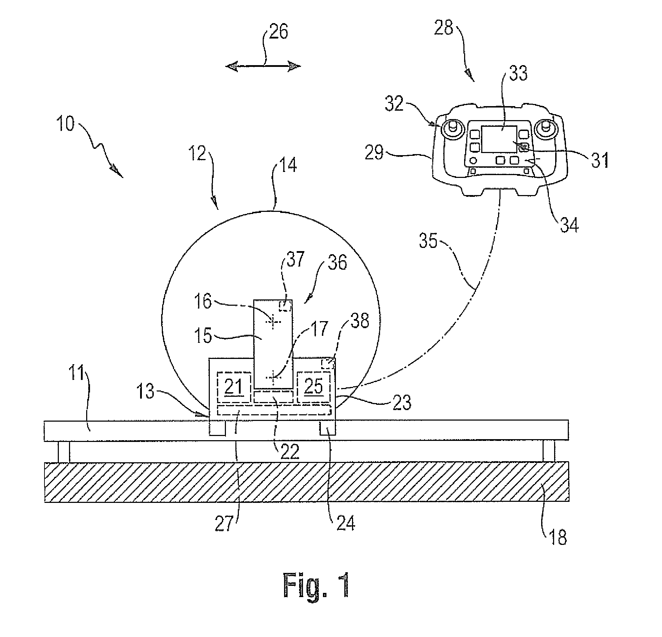

**FIG. 1** zeigt ein schienengeführtes Gerätesystem **10** bestehend aus einer Führungsschiene **11,** einem an der Führungsschiene 11 verschiebbar angeordneten Werkzeuggerät **12** und einer motorischen Vorschubeinrichtung **13** zum Verschieben des Werkzeuggerätes 12 entlang der Führungsschiene 11 in einer schematischen Darstellung.

Das Werkzeuggerät ist als Sägekopf 12 ausgebildet und umfasst ein Sägeblatt **14,** das an einem Sägearm **15** befestigt ist und um eine Drehachse **16** angetrieben wird. Der Sägearm 15 ist um eine Schwenkachse **17** schwenkbar ausgebildet. Durch eine Schwenkbewegung des Sägearms 15 um die Schwenkachse 17 wird die Schnitttiefe des Sägeblattes 14 verändert. Der Schwenkwinkel des Sägearms 15 bestimmt mit dem Durchmesser des Sägeblattes 14, wie tief das Sägeblatt 14 in ein zu bearbeitendes Werkstück **18** eintaucht. Alternativ zur Schwenkbewegung des Sägearms 15 um die Schwenkachse 17 kann der Sägearm 15 beispielsweise mit Hilfe eines Linearantriebes oder einer sonstigen Antriebseinrichtung verstellt werden. Das Eintauchen des Sägeblattes 14 in das Werkstück 18 wird unabhängig von der konstruktiven Gestaltung der Antriebseinrichtung als Zustellbewegung des Sägearms 15 bezeichnet. Zum Schutz des Bedieners kann das Sägeblatt 14 von einem Sägeblattschutz umgeben sein, der mittels eines Blattschutzhalters am Sägearm 15 befestigt wird.

Die Drehung des Sägeblattes 14 um die Drehachse 16 erfolgt über einen Antriebsmotor **21** und die Schwenkbewegung des Sägearms 15 um die Schwenkachse 17 erfolgt über einen Schwenkmotor **22.** Der Antriebsmotor 21 und der Schwenkmotor 22 sind in einem Gerätegehäuse **23** des Sägekopfes 12 angeordnet. Die motorische Vorschubeinrichtung 13 umfasst einen Führungsschlitten **24** und einen Vorschubmotor **25,** der im Gerätegehäuse 23 angeordnet ist. Der Sägekopf 12 ist auf dem Führungsschlitten 24 befestigt und über den Vorschubmotor 25 entlang der Führungsschiene 11 in einer Vorschubrichtung **26** verschiebbar ausgebildet. Im Gerätegehäuse 23 ist neben den Motoren 21, 22, 25 eine erste Kontrolleinrichtung **27** zur Steuerung des Sägekopfes 12 und der motorischen Vorschubeinrichtung 13 angeordnet. In der ersten Kontrolleinrichtung 27 ist ein erfindungsgemäßes Verfahren zur Steuerung des Gerätesystems 10 beim Einstechen des Sägeblattes 14 in das zu bearbeitende Werkstück 18 gespeichert.

Die Sägeblätter 14 für den Sägekopf 12 sind zweiteilig aus einem Grundkörper und mehreren Schneidsegmenten aufgebaut, wobei die Schneidsegmente am Umfang des Grundkörpers angeordnet sind. Die Schneidsegmente sind aus einem Matrixwerkstoff aufgebaut, in den Diamantpartikel eingebettet sind. Zum Freilegen der Diamantpartikel bei der Bearbeitung ist eine minimale Flächenpressung erforderlich. Wird die minimale Flächenpressung unterschritten, werden die Diamantpartikel bei der Bearbeitung mit dem Sägeblatt 14 nicht freigelegt und es besteht die Gefahr, dass ein Polieren der Schneidsegmente auftritt, was die Bearbeitungsgeschwindigkeit des Sägeblattes 14 und die Lebensdauer der Schneidsegmente reduziert. Die minimale Flächenpressung der Schneidsegmente entspricht einer kritischen Bogenlänge Φₖᵣᵢₜ des Sägeblattes 14. Daher soll die mit dem Werkstück 18 in Eingriff stehende Bogenlänge des Sägeblattes 14 die kritische Bogenlänge Φₖᵣᵢₜ nicht überschreiten. Der Wert für die kritische Bogenlänge Φₖᵣᵢₜ eines Sägeblattes 14 hängt von mehreren Parametern ab, unter anderem von der Spezifikation des Sägeblattes 14, dem Material des Werkstückes 18, der Motorleistung und dem Drehmoment des Antriebsmotors 21.

Die Bedienung des Gerätesystems 10 erfolgt über eine Steuerungseinrichtung **28,** die in der gezeigten Ausführung der FIG. 1 als Fernsteuerungseinrichtung ausgebildet ist. Die Fernsteuerungseinrichtung 28 umfasst ein Gerätegehäuse **29,** eine im Gerätegehäuse 29 angeordnete zweite Kontrolleinrichtung **31** sowie eine Bedienungseinrichtung **32** und eine Anzeigeeinrichtung **33,** die auf einer Oberseite **34** des Gerätegehäuses 29 angeordnet sind. Die zweite Kontrolleinrichtung 31 ist über eine Kommunikationsverbindung **35** mit der ersten Kontrolleinrichtung 27 verbunden. Die Kommunikationsverbindung 35 ist als Kabelverbindung oder als kabellose Kommunikationsverbindung, beispielsweise in Form einer Infrarot-, Bluetooth-, WLAN- oder Wi-Fi-Verbindung, ausgebildet. Neben den aufgeführten, kabellosen Verbindungstechnologien eignen sich sämtliche bereits bekannten und zukünftigen kabellosen Verbindungstechnologien zur Datenübertragung.

Zur Überwachung des Gerätesystems 10 und des Bearbeitungsprozesses weist das Gerätesystem 10 eine Sensoreinrichtung **36** mit mehreren Sensorelementen auf. Ein erstes Sensorelement **37** ist als Schwenkwinkelsensor und ein zweites Sensorelement **38** als Wegsensor ausgebildet. Der Schwenkwinkelsensor 37 misst den momentanen Schwenkwinkel des Sägearms 15. Der Schwenkwinkel des Sägearms 15 bestimmt mit dem Durchmesser des Sägeblattes 14, wie tief das Sägeblatt 14 in das Werkstück 18 eintaucht. Der Wegsensor 38 misst die aktuelle Position des Sägekopfes 12 auf der Führungsschiene 11. Die Messgrößen werden vom Schwenkwinkelsensor 37 und Wegsensor 38 an die erste Kontrolleinrichtung 27 übermittelt.

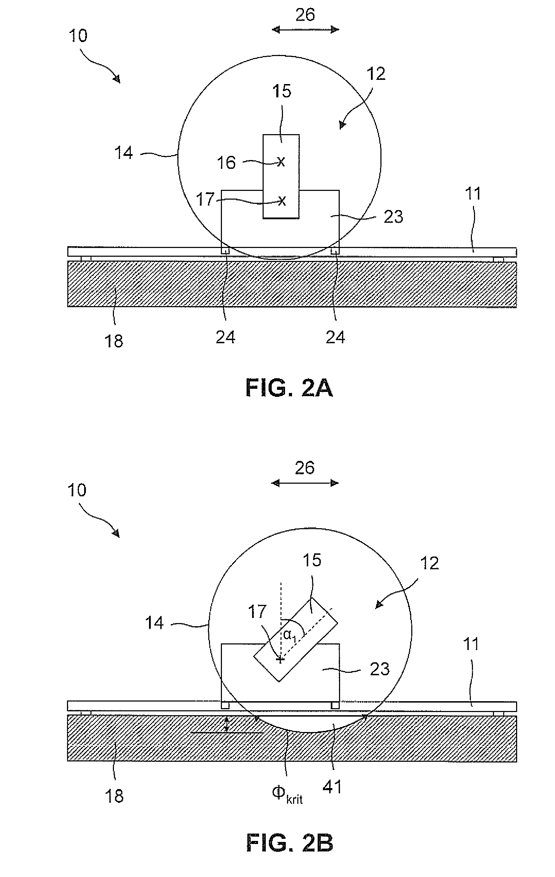

**FIGN. 2A-E** zeigen den Sägekopf 12 und den Sägearm 15 mit dem montierten Sägeblatt 14 des Gerätesystems 10 in fünf verschiedenen Positionen während des Einstechens mit dem Sägeblatt 14 in das zu bearbeitende Werkstück 18. Das Einstechen erfolgt automatisch mit Hilfe des erfindungsgemäßen Verfahrens zur Steuerung eines Gerätesystems beim Einstechen des Sägeblattes in ein Werkstück.

FIG. 2A zeigt den Sägekopf 12 und den Sägearm 15 mit dem montierten Sägeblatt 14 in einer Grundposition. In der Grundposition ist das Sägeblatt 14 oberhalb des Werkstückes 18 angeordnet. Aus der Grundposition wird das Sägeblatt 14 durch eine Schwenkbewegung des Sägearms 15 um die Schwenkachse 17 in das Werkstück 18 hineinbewegt. Während der Schwenkbewegung des Sägearms 15 wird das Sägeblatt 14 vom Antriebsmotor 21 um die Drehachse 16 angetrieben. Das Sägeblatt 14 erzeugt im Werkstück 18 einen ersten Schneidkeil **41** (FIG. 2B). Während der Schwenkbewegung des Sägearms 15 wird eine Bogelänge **Φ** des Sägeblattes 14, die mit dem Werkstück 18 in Eingriff steht, von der ersten Kontrolleinrichtung 27 berechnet und mit der kritischen Bogenlänge Φₖᵣᵢₜ verglichen. Die mit dem Werkstück 18 in Eingriff stehende Bogenlänge des Sägeblattes 14 kann aus dem Durchmesser des Sägeblattes 14, dem Schwenkwinkel des Sägearms 15 und der Position des Sägekopfes 12 berechnet werden. Der Schwenkwinkel des Sägearms 15 wird vom Schwenkwinkelsensor 37 gemessen und die Position des Sägekopfes 12 wird vom Wegsensor 38 gemessen. Sobald die Bogenlänge Φ des Sägeblattes 14 der kritischen Bogenlänge Φₖᵣᵢₜ entspricht, wird die Schwenkbewegung des Sägearms 15 unterbrochen. FIG. 2B zeigt den Sägearm 15 mit dem Sägeblatt 14 nach der ersten Schwenkbewegung des Sägearms 15. Der Sägearm 15 ist unter einem ersten Schwenkwinkel α₁ geneigt.

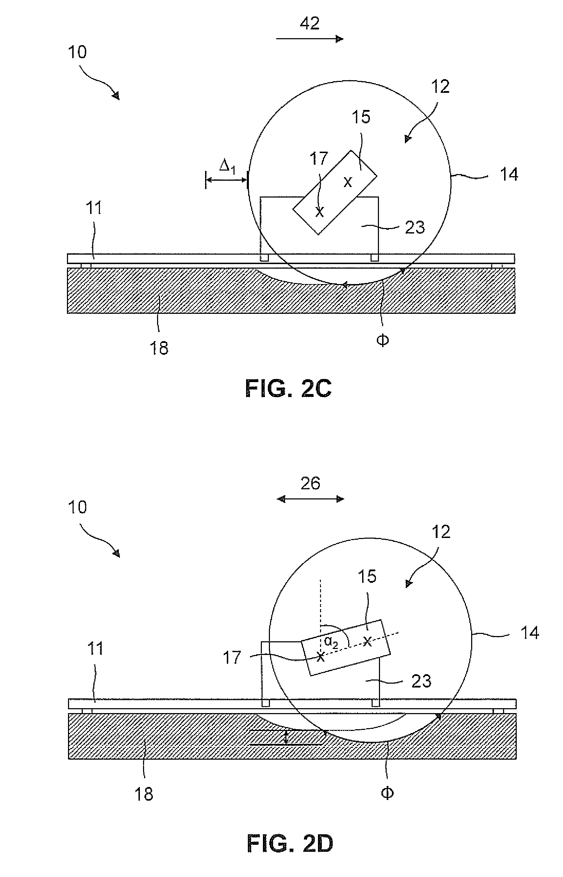

Der Sägekopf 12 mit dem geneigten Sägearm 15 wird über die motorische Vorschubeinrichtung 13 entlang der Vorschubrichtung 26 in einer Hinrichtung **42** verfahren. Bei der Vorschubbewegung nimmt die mit dem Werkstück 18 in Eingriff stehende Bogenlänge Φ des Sägeblattes 14 ab und fällt unter die kritische Bogenlänge Φₖᵣᵢₜ. Während der Vorschubbewegung des Sägekopfes 12 in der Hinrichtung 42 wird die Position des Sägekopfes 12 vom Wegsensor 38 überwacht. Der Wegsensor 38 übermittelt die Position des Sägekopfes 12 an die erste Kontrolleinrichtung 27, die eine Verschiebung Δ berechnet. Sobald der Sägekopf 12 um eine voreingestellte, erste Verschiebung Δ₁ in der Hinrichtung 42 verfahren wurde, beispielsweise 1/10 bis 3/20 des Durchmessers des Sägeblattes 14, wird die Vorschubbewegung des Sägekopfes 12 in der Hinrichtung 42 unterbrochen. FIG. 2C zeigt den Sägekopf 12 und den Sägearm 15 mit dem Sägeblatt 14 nach der ersten Vorschubbewegung des Sägekopfes 12. Der Sägearm 15 ist weiterhin unter dem ersten Schwenkwinkel α₁ geneigt.

Das Sägeblatt 14 wird bei feststehendem Sägekopf 12 aus dem ersten Schwenkwinkel α₁ durch eine Schwenkbewegung des Sägearms 15 um die Schwenkachse 17 weiter in das Werkstück 18 hineinbewegt (FIG. 2D). Während der Schwenkbewegung des Sägearms 15 wird die, mit dem Werkstück 18 in Eingriff stehende, Bogenlänge Φ des Sägeblattes 14 berechnet und mit der kritischen Bogenlänge Φₖᵣᵢₜ verglichen. Sobald die Bogenlänge Φ des Sägeblattes 14 der kritischen Bogenlänge Φₖᵣᵢₜ entspricht, wird die Schwenkbewegung des Sägearms 15 unterbrochen. FIG. 2D zeigt den Sägekopf 12 und den Sägearm 15 mit dem Sägeblatt 14 nach der zweiten Schwenkbewegung des Sägearms 15, der unter einem zweiten Schwenkwinkel α₂ geneigt ist.

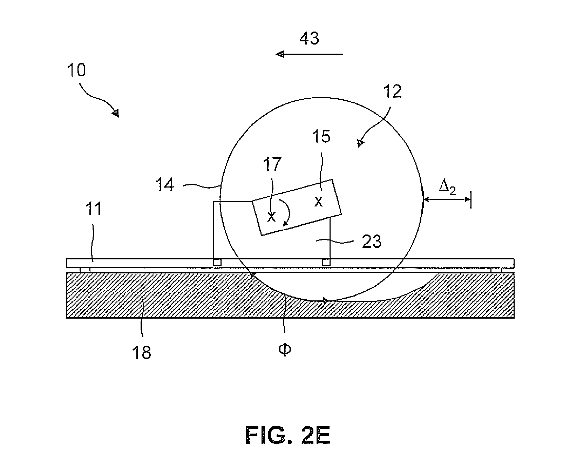

Nach der zweiten Schwenkbewegung des Sägearms 15 wird das Sägeblatt 14 über die motorische Vorschubeinrichtung 13 in einer, zur Hinrichtung 42 entgegen gerichteten, Rückrichtung **43** verfahren. Bei der Vorschubbewegung nimmt die, mit dem Werkstück 18 in Eingriff stehende, Bogenlänge Φ des Sägeblattes 14 ab und fällt unter die kritische Bogenlänge Φₖᵣᵢₜ. Während der Vorschubbewegung des Sägekopfes 12 in der Rückrichtung 43 wird die Position des Sägekopfes 12 vom Wegsensor 38 überwacht. Sobald der Sägekopf 12 um eine voreingestellte, zweite Verschiebung Δ₂ in der Rückrichtung 43 verfahren wurde, beispielsweise 1/10 bis 3/20 des Durchmessers des Sägeblattes 14, wird die Vorschubbewegung des Sägekopfes 12 in der Rückrichtung 43 unterbrochen. FIG. 2E zeigt den Sägekopf 12 und den Sägearm 15 mit dem Sägeblatt 14 nach der zweiten Vorschubbewegung des Sägekopfes 12. Der Sägearm 15 ist weiterhin unter dem zweiten Schwenkwinkel α₂ geneigt.

Die erste Verschiebung Δ₁ in der Hinrichtung 42 und die zweite Verschiebung Δ₂ in der Rückrichtung 43 sind voreingestellte Werte, die in der ersten Kontrolleinrichtung 27 gespeichert sind. Die Werte Δ₁, Δ₂ sind so gewählt, dass das Sägeblatt 14 nach der Zustellbewegung frei geschnitten wird und die mit dem Werkstück 18 in Eingriff stehende Bogenlänge Φ des Sägeblattes 14 die kritische Bogenlänge Φₖᵣᵢₜ unterschreitet. In der Regel stimmen die erste und zweite Verschiebung Δ₁, Δ₂ vom Betrag überein und unterscheiden sich lediglich in der Verschieberichtung 42, 43. Diese Ausführung führt dazu, dass das Sägeblatt 14 in der Vorschubrichtung 26 nach der zweiten Vorschubbewegung wieder in der Startposition angeordnet ist. Die Schwenkbewegung des Sägearms 15 um die Schwenkachse 17 und die Vorschubbewegung des Sägekopfes 12 entlang der Vorschubrichtung 26 werden solange abwechselnd ausgeführt, bis das Einstechen des Sägeblattes 14 beendet ist und das Sägeblatt 14 die gewünschte Schnitttiefe im Werkstück 18 erreicht hat.

## Patentansprüche

1. Verfahren zur Steuerung eines Gerätesystems (10) mit einem Sägeblatt (14), das an einem Sägearm (15) befestigt ist und mittels einer motorischen Vorschubeinrichtung (13) entlang einer Vorschubrichtung (26) verschiebbar ist, wobei eine Zustellbewegung des Sägearms (15) mit dem Sägeblatt (14) in das Werkstück (18) erfolgt,
**dadurch gekennzeichnet, dass** während der Zustellbewegung des Sägearms (15) in das Werkstück (18) von einer Kontrolleinrichtung (27) eine, mit dem Werkstück (18) in Eingriff stehende Bogenlänge (CD) des Sägeblattes (14) berechnet wird und die berechnete Bogenlänge (Φ) mit einer voreingestellten, kritischen Bogenlänge (Φₖᵣᵢₜ) des Sägeblattes (14) verglichen wird.

2. Verfahren nach Anspruch 1, **dadurch gekennzeichnet, dass** die Zustellbewegung des Sägearms (15) unterbrochen wird und eine Vorschubbewegung des Sägeblattes (14) in einer Hinrichtung (42) entlang der Vorschubrichtung (26) erfolgt, wenn die berechnete Bogenlänge (Φ) der kritischen Bogenlänge (Φₖᵣᵢₜ) des Sägeblattes (14) entspricht.

3. Verfahren nach Anspruch 2, **dadurch gekennzeichnet, dass** während der Vorschubbewegung des Sägeblattes (14) von der Kontrolleinrichtung (27) eine Verschiebung (Δ) des Sägeblattes (14) in der Hinrichtung (42) berechnet wird und die berechnete Verschiebung (Δ) mit einer voreingestellten, ersten Verschiebung (Δ₁) verglichen wird.

4. Verfahren nach Anspruch 3, **dadurch gekennzeichnet, dass** die Vorschubbewegung des Sägeblattes (14) unterbrochen wird und eine weitere Zustellbewegung des Sägearms (15) in das Werkstück (18) erfolgt, wenn die berechnete Verschiebung (Δ) des Sägeblattes (14) der ersten Verschiebung (Δ₁) entspricht.

5. Verfahren nach Anspruch 4, **dadurch gekennzeichnet, dass** während der weiteren Zustellbewegung des Sägearms (15) von der Kontrolleinrichtung (27) die, mit dem Werkstück (18) in Eingriff stehende, Bogenlänge (Φ) des Sägeblattes (14) berechnet wird und die berechnete Bogenlänge (Φ) des Sägeblattes (14) mit der kritischen Bogenlänge (Φₖᵣᵢₜ) verglichen wird.

6. Verfahren nach Anspruch 5, **dadurch gekennzeichnet, dass** die weitere Zustellbewegung des Sägearms (15) unterbrochen wird und eine Vorschubbewegung des Sägeblattes (14) in einer, zur Hinrichtung (42) entgegen gerichteten, Rückrichtung (43) entlang der Vorschubrichtung (26) erfolgt, wenn die berechnete Bogenlänge (Φ) der kritischen Bogenlänge (Φₖᵣᵢₜ) des Sägeblattes (14) entspricht.

7. Verfahren nach Anspruch 6, **dadurch gekennzeichnet, dass** während der Vorschubbewegung des Sägeblattes (14) von der Kontrolleinrichtung (27) die Verschiebung (Δ) des Sägeblattes (14) in der Rückrichtung (43) berechnet wird und die berechnete Verschiebung (Δ) mit einer voreingestellten, zweiten Verschiebung (Δ₂) verglichen wird.

8. Verfahren nach Anspruch 7, **dadurch gekennzeichnet, dass** die Vorschubbewegung des Sägeblattes (14) unterbrochen wird, wenn die berechnete Verschiebung (Δ) des Sägeblattes (14) der zweiten Verschiebung (Δ₂) entspricht.

## Claims

1. Method of controlling a tool system (10) comprising a saw blade (14) fastened to a saw arm (15) and displaceable in a feed direction (26) by means of a motor-driven feed unit (13), wherein there is an infeed motion of the saw arm (15) with the saw blade (14) into the workpiece (18), **characterised in that** a control unit (27) calculates an arc length (Φ) of the saw blade (14) in engagement with the workpiece (18) during the infeed motion of the saw arm (15) into the workpiece (18) and the calculated arc length (Φ) is compared with a pre-set critical arc length (Φ_{crit}) of the saw blade (14).

2. Method according to claim 1, **characterised in that** the infeed motion of the saw arm (15) is interrupted and there is a feed motion of the saw blade (14) in a forward direction (42) in the feed direction (26) when the calculated arc length (Φ) corresponds to the critical arc length (Φ_{crit}) of the saw blade (14).

3. Method according to claim 2, **characterised in that** the control unit (27) calculates a displacement (Δ) of the saw blade (14) in the forward direction (42) during the feed motion of the saw blade (14) and the calculated displacement (Δ) is compared with a pre-set first displacement (Δ₁).

4. Method according to claim 3, **characterised in that** the feed motion of the saw blade (14) is interrupted and there is an additional infeed motion of the saw arm (15) into the workpiece (18) when the calculated displacement (Δ) of the saw blade (14) corresponds to the first displacement (Δ₁).

5. Method according to claim 4, **characterised in that** the control unit (27) calculates the arc length (Φ) of the saw blade (14) in engagement with the workpiece (18) during the additional infeed motion of the saw arm (15) and the calculated arc length (Φ) of the saw blade (14) is compared with the critical arc length (Φ_{crit}).

6. Method according to claim 5, **characterised in that** the additional infeed motion of the saw arm (15) is interrupted and there is a feed motion of the saw blade (14) in a reverse direction (43) opposite to the forward direction (42) in the feed direction (26) when the calculated arc length (Φ) corresponds to the critical arc length (Φ_{crit}) of the saw blade (14).

7. Method according to claim 6, **characterised in that** the control unit (27) calculates the displacement (Δ) of the saw blade (14) in the reverse direction (43) during the feed motion of the saw blade (14) and the calculated displacement (Δ) is compared with a pre-set second displacement (Δ₂).

8. Method according to claim 7, **characterised in that** the feed motion of the saw blade (14) is interrupted when the calculated displacement (Δ) of the saw blade (14) corresponds to the second displacement (Δ₂).

## Revendications

1. Procédé de commande d'un système d'appareil (10) comportant une lame de scie (14) qui est fixée à un bras de scie (15) et qui peut être déplacée au moyen d'un dispositif d'avance motorisé (13) le long d'une direction d'avance (26), dans lequel le bras de scie (15) avec la lame de scie (14) réalise un mouvement d'approche dans la pièce (18),
**caractérisé en ce que** pendant le mouvement d'approche du bras de scie (15) dans la pièce (18), une longueur d'arc (Φ) de la lame de scie (14) restant engagée dans la pièce (18) est calculée par un contrôleur (27) et la longueur d'arc (Φ) calculée est comparée à une longueur d'arc critique (φₖᵣᵢₜ), préréglée, de la lame de scie (14).

2. Procédé selon la revendication 1, **caractérisé en ce que** le mouvement d'approche du bras de scie (15) est interrompu et la lame de scie (14) réalise un mouvement d'avance dans une direction vers l'avant (42) le long de la direction d'avance (26), lorsque la longueur d'arc calculée (Φ) correspond à la longueur d'arc critique (Φₖᵣᵢₜ) de la lame de scie (14).

3. Procédé selon la revendication 2, **caractérisé en ce que** pendant le mouvement d'avance de la lame de scie (14), un déplacement (Δ) de la lame de scie (14) dans la direction vers l'avant (42) est calculé par le contrôleur (27) et le déplacement calculé est comparé à un premier déplacement (Δ₁), préréglé.

4. Procédé selon la revendication 3, **caractérisé en ce que** le mouvement d'avance de la lame de scie (14) est interrompu et le bras de scie (15) réalise un mouvement d'approche supplémentaire dans la pièce (18), lorsque le déplacement calculé (Δ) de la lame de scie (14) correspond au premier déplacement (Δ₁).

5. Procédé selon la revendication 4, **caractérisé en ce que** pendant le mouvement d'approche supplémentaire du bras de scie (15), la longueur d'arc (Φ) de la lame de scie (14) restant engagée dans la pièce (18) est calculée par le contrôleur (27) et la longueur d'arc calculée (φ) de la lame de scie (14) est comparée à la longueur d'arc critique (φₖᵣᵢₜ).

6. Procédé selon la revendication 5, **caractérisé en ce que** le mouvement d'approche supplémentaire du bras de scie (15) est interrompu et la lame de scie (14) réalise un mouvement d'avance dans une direction vers l'arrière (43) opposée à la direction vers l'avant (42) le long de la direction d'avance (26), lorsque la longueur d'arc calculée (Φ) correspond à la longueur d'arc critique (Φₖᵣᵢₜ) de la lame de scie (14).

7. Procédé selon la revendication 6, **caractérisé en ce que** pendant le mouvement d'avance de la lame de scie (14), le déplacement (Δ) de la lame de scie (14) dans la direction vers l'arrière (43) est calculé par le contrôleur (27) et le déplacement calculé (Δ) est comparé à un second déplacement (Δ₂), préréglé.

8. Procédé selon la revendication 7, **caractérisé en ce que** le mouvement d'avance de la lame de scie (14) est interrompu, lorsque le déplacement calculé (Δ) de la lame de scie (14) correspond au second déplacement (Δ₂).
